# EUROPEAN PATENT APPLICATION

(11) **EP 4 318 646 A1**
(43) Date of publication of application: **07.02.2024**
(21) Application number: 23185236.9
(22) Date of filing: 13.07.2023
(51) Int. Cl.: H01M 4/1315, H01B 1/12

(54) **SOLID ION CONDUCTOR COMPOUND, ELECTROCHEMICAL CELL, AND METHOD OF PREPARING THE SOLID ION CONDUCTOR COMPOUND**

(30) Priority: 02.08.2022 KR 20220096103; 22.06.2023 KR 20230080673
(71) Applicant: Samsung SDI Co., Ltd., Yongin-si, Gyeonggi-do 17084 (KR)
(72) Inventor: CHOI, Wonsung, 16678 Suwon-si (KR); LEE, Seoksoo, 16678 Suwon-si (KR)
(74) Representative: Elkington and Fife LLP

(57) **Abstract**

A solid ion conductor compound including a compound represented by Formula 1:

Formula 1 M₃₊ₘ₊₍ₗ₋₁₎ₒ₊₂ₚ(M'^{k+})ₙX_{3+m+kn-lo-3p+q}T^{l-}ₒZ³'ₚ

wherein, in Formula 1,
M is at least one alkali metal,
M' is at least one of a divalent metal, a trivalent metal, a tetravalent metal, a pentavalent metal, a hexavalent metal, or a combination thereof,
X is at least one halogen,
T is at least one of a monovalent anion or a divalent anion,
Z is at least one of a trivalent anion,
2≤k≤6, 1≤l≤2, -3≤m≤3, 0<n≤1, 0≤o<3, 0<p<2, -3≤q≤3, and 0<(3+m+kn-lo-3p+q).

## Description

### FIELD OF THE INVENTION

The disclosure relates to a solid ion conductor compound, a solid electrolyte including the solid ion conductor compound, a lithium battery including the solid ion conductor compound, and a method of preparing the solid ion conductor compound.

### BACKGROUND OF THE INVENTION

An all-solid lithium battery includes a solid electrolyte. As the all-solid lithium battery may not contain a combustible organic solvent, the all-solid lithium battery has excellent stability.

Solid electrolyte materials in the related art may not be sufficiently stable to lithium metal. In addition, the lithium ion conductivity of solid electrolytes in the related art is lower than that of liquid substitutes. Thus there remains a need for an improved solid electrolyte.

### SUMMARY OF THE INVENTION

Provided is a solid ion conductor compound having excellent lithium ion conductivity by having a novel composition.

Additional aspects will be set forth in part in the description which follows and, in part, will be apparent from the description, or may be learned by practice of the presented embodiments of the disclosure.

According to an aspect of the disclosure, a solid ion conductor compound includes a compound represented by Formula 1:

Formula 1 M₃₊ₘ₊₍ₗ₋₁₎ₒ₊₂ₚ(M'^{k+})ₙX_{3+m+kn-lo-3p+q}T^{l-}ₒZ³⁻p

wherein, in Formula 1,
M is at least one alkali metal,
M' is at least one of a divalent metal, a trivalent metal, a tetravalent metal, a pentavalent metal, or a hexavalent metal,
X is at least one halogen,
T is at least one of a monovalent anion, or a divalent anion,
Z is at least one of a trivalent anion,
2≤k≤6, 1≤l≤2, -3≤m≤3, 0<n≤1, 0≤o<3, 0<p<2, -3≤q≤3, and 0<(3+m+kn-lo-3p+q).

According to an embodiment, in Formula 1, M comprises at least one of Li, Na, K, Rb, or Cs. For example, M is at least one of Li, or Na.

According to an embodiment, in Formula 1, M' comprises at least one of Mg, Zn, Ca, Sr, Ba, Eu, Y, Gd, In, Er, La, Yb, Ce, Ho, Sn, Th, Nb, Mo, W, Sb, Bi, Zr, Hf, Ti, or Si.

According to an embodiment, in Formula 1, X comprises at least one of F, Cl, Br, or I.

According to an embodiment, in Formula 1, Z comprises at least one of PO₄³⁻, (C₆H₅O₇)³⁻, PS₄³⁻, [Fe(CN)]³⁻, [Ag(S₂O₃)₂]³⁻, N³⁻, or P³⁻. For example, Z comprises a trivalent polyatomic ion.

According to an embodiment, in Formula 1, T comprises at least one of NO₃⁻, CH₃COO⁻, OH⁻, HCO₃⁻, CrO₄²⁻, SO₄²⁻, CO₃²⁻, or BH₄⁻.

According to an embodiment, in Formula 1, 3≤k≤5.

According to an embodiment, in Formula 1, -3≤m≤0.5.

According to an embodiment, in Formula 1, 0<p≤0.3.

According to an embodiment, in Formula 1, 2<(3+m+(l-1)o+2p)<3.

According to an embodiment, in Formula 1, 5.8≤3+m+kn-lo-3p+q<6.

According to an embodiment, the Formula 1 is represented by Formula 2:

Formula 2 (Li₁₋ₕMₕ)₃₊ₘ₊₍ₗ₋₁₎ₒ₊₂ₚ(M'^{k+})ₙX_{3+m+kn-lo-3p+q}T^{l-}ₒ((PO₄)₁₋ᵢZ'ᵢ)ₚ

wherein, in Formula 2,
M is at least one alkali metal other than Li,
Z' is at least one of a trivalent anion other than PO₄³⁻,
M' is at least one of a divalent metal, a trivalent metal, a tetravalent metal, a pentavalent metal, or a hexavalent metal,
X is at least one halogen,
T is at least one of a monovalent anion, or a divalent anion, and
2≤k≤6, 1≤l≤2, -3≤m≤3, 0<n≤1, 0≤o<3, 0<p<2, -3≤q≤3, 0<(3+m+kn-lo-3p+q), 0≤h<1, and 0≤i<1.

According to an embodiment, in Formula 2, M is Na.

According to an embodiment, in Formula 2, 0≤h≤0.5.

According to an embodiment, in Formula 2, 0≤i≤0.5.

According to an embodiment, the Formula 1 is represented by Formula 3:

Formula 3 (Li₁₋ₕMₕ)₃₊ₘ₊₍ₗ₋₁₎ₒ₊₂ₚ((Zr)₁₋ⱼM'ⱼ^{k+})ₙX_{3+m+kn-lo-3p+q}T^{l-}ₒ((PO₄)₁₋ᵢZ'ᵢ)ₚ

wherein, in Formula 3,
M is at least one alkali metal other than Li,
Z' is at least one of a trivalent anion other than PO₄³⁻,
M' is at least one of a divalent metal, a trivalent metal, a tetravalent metal, a pentavalent metal, and a hexavalent metal other than Zr,
X is at least one halogen,
T is at least one of a monovalent anion, or a divalent anion, and
2≤k≤6, 1≤l≤2, -3≤m≤3, 0<n≤1, 0≤o<3, 0<p<2, -3≤q≤3, 0<(3+m+kn-lo-3p+q), 0≤h<1, 0≤i<1, and 0≤j<1.

According to an embodiment, in Formula 3, 0≤j≤0.5.

According to an embodiment, the solid ion conductor compound has diffraction peaks at diffraction angles of 16°2θ±0.5°2θ, 20°2θ±0.5°2θ, 30°2θ±0.5°2θ, 32°2θ±0.5°2θ, 42°2θ±0.5°2θ, and 50°2θ±0.5°2θ, when analyzed by an X-ray diffraction using CuKα radiation.

According to an embodiment, the solid ion conductor compound has an ion conductivity of about 0.3 millisiemens per centimeter or greater at a temperature of about 25 °C.

According to an embodiment, the solid ion conductor compound comprises at least one of a crystalline phase and a non-crystalline phase.

According to an embodiment, the solid ion conductor compound comprises a crystal belonging to a P3-m1 space group.

According to an embodiment, the solid ion conductor compound has a and c lattice constants, which are greater than a and c lattice constants of a solid ion conductor compound not comprising the trivalent anion represented by Z.

According to an embodiment, the solid ion conductor compound is Li_{2.1}ZrCl_{5.95}(PO₄)_{0.05}, Li_{2.02}ZrCl_{5.99}(PO₄)_{0.01}, Li_{2.04}ZrCl_{5.98}(PO₄)_{0.02}, Li_{2.08}ZrCl_{5.96}(PO₄)_{0.04}, Li_{2.12}ZrCl_{5.94}(PO₄)_{0.06}, Li_{2.2}ZrCl_{5.9}(PO₄)_{0.1}, Li_{2.15}Zr_{0.8}Y_{0.2}Cl_{5.95}(PO₄)_{0.05}, Li_{2.45}Zr_{0.5}Y_{0.5}Cl_{5.95}(PO₄)_{0.05}, Li_{2.22}ZrCl_{5.89}(PO₄)_{0.11}, Li_{2.24}ZrCl_{5.88}(PO₄)_{0.12}, Li_{2.3}ZrCl_{5.85}(PO₄)_{0.15}, Li_{2.4}ZrCl_{5.8}(PO₄)_{0.2}, Li_{2.6}ZrCl_{5.7}(PO₄)_{0.3}, or Li_{2.1}ZrCl_{5.95}(PS₄)_{0.05}.

According to another aspect of the disclosure, a method of preparing a solid ion conductor compound includes: providing a mixture including a halide compound containing an M element, a halide compound containing an M' element, and a compound containing a Z anion, wherein the M element is at least one alkali metal, the M' element is at least one of a divalent metal, a trivalent metal, a tetravalent metal, a pentavalent metal, or a hexavalent metal, and the Z anion is at least one of a trivalent anion; and
treating the mixture in a solid phase to prepare the solid ion conductor compound.

According to an embodiment, the treating of the mixture in a solid phase to prepare the solid ion conductor compound comprises ball milling the mixture in a dry and inert atmosphere.

According to an embodiment, the ball milling is performed for a first period of time, and the ball milling further comprises a rest period of time after the first period of time, wherein the first period of time and the rest period of time are repeated.

According to another aspect of the disclosure, an electrochemical cell includes: a positive electrode layer including a positive active material layer including a positive active material;
a negative electrode layer including a negative active material layer including a negative active material; and
a solid electrolyte layer between the positive electrode layer and the negative electrode layer and including a solid electrolyte, wherein at least one of the positive electrode layer, or the solid electrolyte layer includes the solid ion conductor compound.

According to an embodiment, the solid electrolyte layer comprises a sulfide solid electrolyte.

According to an embodiment, the positive active material layer comprises at least one of a positive active material represented by LiNiₓCo_{y}Al_{z}O₂ wherein 0<x<1, 0<y<1, 0<z<1, and x+y+z=1, or LiNi_{x'}Co_{y'}Mn_{z'}O₂ wherein 0<x'<1, 0<y'<1, 0<z'<1, and x'+y'+z'=1.

According to an embodiment, the negative active material layer comprises a lithium metal.

According to an embodiment, when charging and discharging at 0.1 C in a range of about 2.5 volts to about 4.2 volts, a discharge capacity is maintained at about 93 percent or greater for 20 cycles, as compared with an initial discharge capacity.

According to an embodiment, the electrochemical cell is an all-solid secondary battery.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a graph of intensity (arbitrary units, a.u.) vs. diffraction angle (°2θ), and shows the results of an X-ray diffraction (XRD) analysis using Cu Ka radiation of solid ion conductor powders of Examples 1, 2, 4, 5, and 6 and Comparative Example 1;
FIG. 2 is a graph of intensity (a.u.) vs. diffraction angle (°2θ), and shows an enlarged view of the XRD spectrum of FIG. 1 of a peak at a diffraction angle of 32.3°2θ;
FIG. 3 is a graph of lattice constant (angstroms, Å) vs. x in Li₂₊₂ₓZr₁₋ₓCl₆₋ₓ(PO₄)ₓ, showing the calculation results of lattice constants of crystalline structures of the solid ion conductor powders of Examples 1, 2, 4, 5, 6 and Comparative Example 1;
FIG. 4 is a graph of ion conductivity (Siemens per centimeter, S·cm⁻¹) vs. x in Li₂₊₂ₓZr₁₋ₓCl₆₋ₓ(PO₄)ₓ showing ion conductivity over a change of molar ratio of trivalent anions of solid ion conductor powders of Examples 1 to 6 and 10 to 14 and Comparative Example 1;
FIG. 5 is a graph of specific capacity (milliampere·hours per gram, mAh·g⁻¹) vs. number of cycles, and shows the results of charging and discharging of all-solid batteries of Example 15 and Comparative Example 8;
FIG. 6 is a graph of specific capacity (mAh·g⁻¹) vs. C rate showing rate characteristics of all-solid batteries of Example 15 and Comparative Examples 8 and 9;
FIG. 7 is a schematic view of an embodiment of an all-solid secondary battery;
FIG. 8 is a schematic view of an embodiment of an all-solid secondary battery; and
FIG. 9 is a graph of intensity (a.u.) vs. binding energy (electronvolts, eV) confirming a presence of a PO₄ ion from an X-ray photoelectron spectroscopy (XPS) analysis of Example 1.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain various aspects. The terminology used herein is for the purpose of describing particular embodiments only and is not intended to be limiting. As used herein, "a," "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. Expressions such as "at least one of," when preceding a list of elements, modify the entire list of elements and do not modify the individual elements of the list.

Various embodiments are shown in the accompanying drawings. However, the inventive concept may be embodied in many different forms, and should not be construed as limited to the embodiments described herein. Rather, these embodiments are provided to enable the present disclosure to be thorough and complete, and will fully convey the scope of the inventive concept to one of ordinary skill in the art. The same reference numeral refers to the same component.

It will be understood that when a component is referred to as being "on" another component, it may be directly on top of the other component, or another component may be interposed therebetween. In contrast, when a component is referred to as being "directly on" another component, another component is not interposed therebetween.

The terms "first," "second," "third," or the like may be used herein to describe various elements, components, regions, layers, sections, and/or areas, but these elements, components, regions, layers, sections, and/or areas should not be limited by these terms. These terms are only used to distinguish one element, component, region, layer, or area from another element, component, region, layer, or area. Accordingly, a first element, component, region, layer, section, or area described herein may be referred to as a second element, component, region, layer, section, or area without departing from the teachings described herein.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

The terms used herein are for describing specific embodiments only and are not intended to limit the inventive concept. The term "and/or" as used herein may include any and all combinations of one or more of the list items. As used in the detailed description, the terms "includes" and/or "including" specify the presence of specified features, regions, integers, steps, actions, elements, and/or components, and do not exclude the presence or addition of one or more other features, regions, integers, steps, actions, elements, components, and/or groups thereof.

Spatially relative terms, such as "below", "lower", "bottom", "above", "higher", "top", are used herein to easily describe the relationship between one element or feature and another element or feature. It will be understood that the spatially relative terms are intended to include different directions of a device in use or operation in addition to the directions shown in the drawings. For example, when a device in the drawing is overturned, elements described as "below" or "under" other elements or features will be oriented "above" the other elements or features. Thus, the exemplary term "under" may encompass both upward and downward directions. The device may be arranged in different directions (rotated 90 degrees or rotated in different directions), and the spatially relative terms used herein may be interpreted accordingly.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value. Endpoints of ranges may each be independently selected.

Unless defined otherwise, all terms (including technical and scientific terms) used herein have the same meaning as the terms commonly understood by one of ordinary skill in the art to which the present disclosure pertains. In addition, it will be understood that terms as defined in commonly used dictionaries should be construed as having meanings consistent with those in the related art and in the context of the present disclosure, and should not be construed as idealized or overly formal.

Embodiments are described herein with reference to schematic cross-sectional views of idealized embodiments. As such, changes in the shape in the drawings should be expected as a result of, for example, manufacturing techniques and/or tolerances. Therefore, the embodiments described herein should not be interpreted as being limited to specific shapes of area as shown in the present specification, but should include deviations of shapes resulting from, for example, the manufacture. For example, areas depicted or described as being flat may typically have rough and/or nonlinear features. Moreover, the sharply illustrated angle may be round. Therefore, the areas shown in the drawings are essentially schematic, and the shapes are not intended to show the exact shape of the area, and are not intended to limit the scope of the claims.

"Group" means a group of the Periodic Table of the Elements according to the International Union of Pure and Applied Chemistry (IUPAC) Group 1-18 group classification system.

Although specific embodiments have been described, alternatives, modifications, variations, improvements, and substantial equivalents that are not currently anticipated may occur to the applicant or one of ordinary skill in the art. Accordingly, the appended claims, which may be filed and amended, are intended to cover all such alternatives, modifications, variations, improvements, and substantial equivalents.

Hereinafter, a solid ion conductor compound, a solid electrolyte including the solid ion conductor compound, an electrochemical cell including the solid electrolyte, and a method of preparing the solid ion conductor compound according to at least one embodiment will be described in further detail.

### Solid ion conductor compound

The solid ion conductor compound includes a compound represented by Formula 1:

Formula 1 M₃₊ₘ₊₍ₗ₋₁₎ₒ₊₂ₚ(M'^{k+})ₙX_{3+m+kn-lo-3p+q}T^{l-}ₒZ³⁻p

wherein, in Formula 1, M is at least one alkali metal.

According to an embodiment, M may include at least one of Li, Na, K, Rb, or Cs. For example, M may include at least one of Li, or Na. According to an embodiment, M may include Li and Na. In an embodiment, a molar ratio of Na/(Li+Na) may be less than about 0.5. That is, when M further includes an additional element other than Li, the molar ratio of the additional element may be less than the molar ratio of Li. According to an embodiment, when some of Li is substituted with Na, Li ion pathway may be expanded according to expansion of a crystal lattice, and as a result, lithium ion conductivity may be improved.

In Formula 1, M' is at least one of a divalent metal, a trivalent metal, a tetravalent metal, a pentavalent metal, or a hexavalent metal. According to an embodiment, M' may include Mg, Zn, Ca, Sr, Ba, Eu, Y, Gd, In, Er, La, Yb, Ce, Ho, Sn, Th, Nb, Mo, W, Sb, Bi, Zr, Hf, Ti, or Si. For example, M' may include Mg, Ca, Er, Sr, Ba, Y, Gd, Er, La, Ho, Zr, Hf, Ti, Ce, or Si, but embodiments are not limited thereto.

In Formula 1, X may be at least one halogen. According to an embodiment, X may be at least one of F, Cl, Br, or I. For example, X may be at least one of Br, or Cl, but embodiments are not limited thereto. According to another embodiment, X may be Cl, and some of Cl may optionally be substituted with Br. In an embodiment, a molar ratio of Br/(CI+Br) may be about 0.5 or less. When a molar ratio of Br is less than a molar ratio of Cl, excessive amorphization in a product may be suppressed, and thus, deterioration of ion conductivity may be prevented.

In Formula 1, T may be at least one of a monovalent anion or a divalent anion. For example, T may be at least one of NO₃⁻, CH₃COO⁻, OH⁻, HCO₃⁻, CrO₄²⁻, SO₄²⁻, CO₃²⁻, or BH4-, but embodiments are not limited thereto.

In Formula 1, Z is at least one of a trivalent anion. According to an embodiment, Z may include a trivalent monoatomic anion, or a trivalent polyatomic anion. For example, Z may be a trivalent polyatomic anion. According to an embodiment, Z may include PO₄³⁻, (C₆H₅O₇)³⁻, PS₄³⁻, [Fe(CN)]³⁻, [Ag(S₂O₃)₂]³⁻, N³⁻, or P³⁻. For example, Z may include PO₄³⁻, (C₆H₅O₇)³⁻, PS₄³⁻, [Fe(CN)]³⁻, or [Ag(S₂O₃)₂]³⁻, but embodiments are not limited thereto.

In Formula 1, k, l, m, n, o, and p, are each independently, 2≤k≤6, 1≤l≤2, - 3≤m≤3, 0<n≤1, 0≤o<3, 0<p<2, -3≤q≤3, and 0<(3+m+kn-lo-3p+q). In an aspect, k is a cation valency of the M element, and for example, 2.5≤k≤5.5, or 3≤k≤5. In an aspect, I is an anion valency of a T element, and for example, T may be 1 or 2. In an aspect, m is a variable determined according to an initial amount of a halide compound containing a starting material of the M element in a synthesis process, and for example, -2≤m≤2 or
-3≤m≤0.5. In an aspect, n may be a molar ratio of the M' element, and for example, 0.5≤n≤1. In an aspect, o may be a molar ratio of the T element, and o may be, for example, 0. In an aspect, p may be a molar ratio of the Z anion, and for example, 0<p≤0.3, 0<p≤0.2, 0<p≤0.1, 0.01≤p≤0.3, 0.01≤p≤0.2, or 0.01≤p≤0.1. In an aspect, q is a variable determined according to an initial input amount of a halide compound containing a starting material of the M' element in a synthesis process, and for example, -3≤q≤2, -2≤q≤1, or -3≤q≤0.5. In an aspect, 3+m+kn-lo-3p+q may be a molar ratio of the halogen, and for example, 5.8≤(3+m+kn-lo-3p+q)<6 or 5.9≤(3+m+kn-lo-3p+q)<6. According to an embodiment, in Formula 1,3+m+(l-1)o+2p may be a molar ratio of M, and 2<(3+m+(l-1)o+2p)<3. For example, 2<(3+m+(l-1)o+2p)<2.5.

When a solid ion conductor compound including the compound represented by Formula 1 satisfies the above-mentioned compositions, the solid ion conductor compound may have improved lifespan characteristics and ion conductivity.

According to an embodiment, Formula 1 may be represented by Formula 2:

Formula 2 (Li₁₋ₕMₕ)₃₊ₘ₊₍ₗ₋₁₎ₒ₊₂ₚ(M'^{k+})ₙX_{3+m+kn-lo-3p+q}T^{l-}ₒ((PO4)₁₋ᵢZ'ᵢ)ₚ

wherein, in Formula 2, M', X, m, n, o, p, k, l, q, and T may respectively be understood by referring to the descriptions of M', X, m, n, o, p, k, l, q, and T provided herein, respectively,
M may be at least one alkali metal other than Li,
Z' may be at least one of a trivalent anion other than PO₄³⁻, and
0≤h<1, and 0≤i<1.

According to an embodiment, M may be Na. According to an embodiment, h may satisfy 0≤h≤0.5 or 0.5≤h<1. According to an embodiment, i may satisfy 0≤i≤0.5 or 0.5≤i<1.

According to an embodiment, Formula 1 may be represented by Formula 3:

Formula 3 (Li₁₋ₕMₕ)₃₊ₘ₊₍ₗ₋₁₎ₒ₊₂ₚ((Zr)₁₋ⱼM'ⱼ^{k+})ₙX_{3+m+kn-lo-3p+q}T^{l-}ₒ((PO₄)₁₋ᵢZ'ᵢ)ₚ

wherein, in Formula 3, X, m, n, o, p, k, l, q, and T may respectively be understood by referring to the descriptions of X, m, n, o, p, k, l, q, and T provided herein, respectively,
M may be at least one alkali metal other than Li,
Z' may be at least one of a trivalent anion other than PO₄³⁻,
M' may be at least one of a divalent metal, a trivalent metal, a tetravalent metal, a pentavalent metal, and a hexavalent metal other than Zr, and
0≤j<1.

According to an embodiment, j may satisfy 0≤j≤0.5 or 0.5≤j<1.

The solid ion conductor compound may have diffraction peaks at diffraction angles of 16°2θ±0.5°2θ, 20°2θ±0.5°2θ, 30°2θ±0.5°2θ, 32°2θ±0.5°2θ, 42°2θ±0.5°2θ, and 50°2θ±0.50°2θ, when analyzed by an X-ray diffraction (XRD) using CuKα radiation.

According to an embodiment, as the solid ion conductor compound has an increased amount of Z anion, a peak of a diffraction angle of 32°2θ±0.5°2θ may be shifted toward a lower diffraction angle.

According to an embodiment, the solid ion conductor compound may have increased lattice constants of a and c axes, as compared with a compound not including a trivalent anion represented by Z.

For example, the solid ion conductor compound may have increased lattice constants by up to about 0.01 angstroms (Å) in an a-axis and about 0.015 Å in a c-axis, as compared with a compound not including a trivalent anion represented by Z.

According to an embodiment, the solid ion conductor compound may have at least one of a crystalline phase, or a non-crystalline phase, and may comprise an amorphous phase.

For example, the solid ion conductor compound may include a layered rock salt crystalline structure as a crystalline phase. For example, the layered rock salt crystalline structure may include a distorted layered rock salt crystalline structure.

According to an embodiment, the solid ion conductor compound may include a crystalline structure belonging to a P3-m1 space group as a crystalline phase.

According to an embodiment, the solid ion conductor compound may have an ion conductivity of about 3.0 x 10⁻⁴ Siemens per centimeter (S/cm) or greater at room temperature, for example, at a temperature of about 25°C. For example, the solid ion conductor compound may have an ion conductivity of about 3.2 x 10⁻⁴ S/cm or greater, about 4.0 x 10⁻⁴ S/cm or greater, about 5.0 x 10⁻⁴ S/cm or greater, about 6.0 x 10⁻⁴ S/cm or greater, about 7.0 x 10⁻⁴ S/cm or greater, about 8.0 x 10⁻⁴ S/cm or greater, about 9.0 x 10⁻⁴ S/cm or greater, or about 1.0 x 10⁻³ S/cm or greater at a temperature of about 25°C. In an aspect, the solid ion conductor compound may have an ion conductivity of about 3.0 x 10⁻⁴ S/cm to about 5.0 x 10⁻¹ S/cm, about 5.0 x 10⁻⁴ S/cm to about 3.0 x 10⁻¹ S/cm, about 7.0 x 10⁻⁴ S/cm to about 1.0 x 10⁻¹ S/cm, at a temperature of about 25°C.

According to an embodiment, the solid ion conductor compound may be Li_{2.1}ZrCl_{5.95}(PO₄)_{0.05}, Li_{2.02}ZrCl_{5.99}(PO₄)_{0.01}, Li_{2.04}ZrCl_{5.98}(PO₄)_{0.02}, Li_{2.08}ZrCl_{5.96}(PO₄)_{0.04}, Li_{2.12}ZrCl_{5.94}(PO₄)_{0.06}, Li_{2.2}ZrCl_{5.9}(PO₄)_{0.1}, Li_{2.15}Zr_{0.8}Y_{0.2}Cl_{5.95}(PO₄)_{0.05}, Li_{2.45}Zr_{0.5}Y_{0.5}Cl_{5.95}(PO₄)_{0.05}, Li_{2.22}ZrCl_{5.89}(PO₄)_{0.11}, Li_{2.24}ZrCl_{5.88}(PO₄)_{0.12}, Li_{2.3}ZrCl_{5.85}(PO₄)_{0.15}, Li_{2.4}ZrCl_{5.8} (PO₄)_{0.2}, Li_{2.6}ZrCl_{5.7}(PO₄)_{0.3}, or Li_{2.1}ZrCl_{5.95}(PS₄)_{0.05}.

### Method of preparing solid ion conductor compound

According to another aspect, a method of preparing a solid ion conductor compound may comprise: providing a mixture comprising a halide compound containing an M element, a halide compound comprising an M' element, and a compound comprising a Z anion, wherein the M element is be at least one alkali metal, the M' element is at least one of a divalent metal, a trivalent metal, a tetravalent metal, a pentavalent metal, or a hexavalent metal, and the Z anionis at least one of a trivalent anion; and treating the mixture in a solid phase to prepare the solid ion conductor compound. Here, the solid ion conductor compound may be the aforementioned solid ion conductor compound.

The halide compound containing the M element may include a lithium halide. For example, the lithium halide may include at least one of LiF, LiCI, LiBr, or Lil. For example, the lithium halide may include at least one of LiCl, or LiBr.

The halide compound containing the M' element may be a divalent, a trivalent, a tetravalent, a pentavalent, or a hexavalent metal halide, and for example, the halide compound containing the M' element may include zirconium halide and yttrium halide. For example, zirconium halide may include at least one of ZrF₄, ZrCl₄, ZrBr₄, or Zrl₄, and yttrium halide may include at least one of YF₃, YCl₃, YBr₃, or Yl₃. For example, the zirconium halide may include at least one of ZrCl₄, or ZrBr₄, and yttrium halide may include at least one of YCl₃, or YBr₃.

The compound containing the Z anion may include a lithium precursor compound containing a trivalent anion. For example, the compound containing the Z anion may include at least one of Li₃PO₄, Li₃(C₆H₅O₇), Li₃PS₄, Li₃[Fe(CN)], Li₃[Ag(S₂O₃)₂], LisN, or LisP.

According to an embodiment, the halide compound containing the M element and the halide compound containing the M' element may be mixed in a stoichiometric ratio of about 1.8:1 or greater and less than about 2:1. For example, the halide compound containing the M element and the halide compound containing the M' element may be mixed in a stoichiometric ratio of about 1.8:1 to about 1.99:1, about 1.8:1 to about 1.98:1, about 1.8:1 to about 1.97:1, about 1.8:1 to about 1.96:1, or about 1.8:1 to about 1.95:1, but embodiments are not limited thereto.

According to an embodiment, the treating of the mixture in a solid phase to obtain the solid ion conductor compound may include ball milling the mixture in a dry and an inert atmosphere at about 400 rotations per minute (rpm) for about 48 hours. The dry and an inert atmosphere may be an Ar atmosphere, or a nitrogen atmosphere.

According to an embodiment, the ball milling may be performed for a first period of time and then have a rest period of time. Here, the first period and the rest period may be identical to or different from each other. For example, the first period may be twice the time of the rest period or, for example, three times greater. As such, by having the rest period during the ball milling, a solid ion conductor compound with improved ion conductivity may be obtained.

According to an embodiment, the first period may be in a range of about 10 minutes to about 20 minutes. For example, the first period may be, about 12 minutes to about 18 minutes, or about 15 minutes.

According to an embodiment, the rest period may be in a range of about 3 minutes to about 10 minutes. For example, the rest period may be in a range of about 3 minutes to about 7 minutes, or about 5 minutes. In an aspect, the ball mill mixing is performed for a first period of time, and the ball mill mixing further comprises a rest period of time after the first period of time, wherein the first period of time and the rest period of time are repeated.

According to an embodiment, the method of preparing the solid ion conductor compound may be carried out at room temperature and may not include calcination or crystallization. For example, the method of preparing a solid ion conductor compound may be performed at room temperature (e.g., 25°C).

A method of preparing the solid ion conductor compound may include heat-treating for crystallization after mixing raw materials, however, in the disclosure, the method of preparing the solid ion conductor compound may not include a separate crystallization after the solid phase mixing. In an aspect, a separate crystallization step is omitted. Accordingly, the preparation method is simplified and may prevent deformation of material structures due to calcination. Therefore, a solid ion conductor compound with improved ion conductivity and having a desired composition and a crystalline structure may be obtained.

The inert atmosphere is an atmosphere that contains inert gas. Examples of the inert gas include nitrogen and argon. However, embodiments are not limited thereto. Any suitable inert gas available in the art may be used.

### Electrochemical cell

According to an embodiment, an electrochemical cell may comprise: a positive electrode layer comprising a positive active material layer comprising a positive active material; a negative electrode layer comprising a negative active material layer comprising a negative active material, and a solid electrolyte layer between the positive electrode layer and the negative electrode layer and comprising a solid electrolyte, wherein at least one of the positive electrode layer, or the solid electrolyte layer may comprise the solid ion conductor compound described above. By including the solid ion conductor compound in the electrochemical cell, the lithium ion conductivity and chemical stability of the electrochemical cell are improved.

The electrochemical cell may be, for example, an all-solid secondary battery, a secondary battery containing a liquid electrolyte, or a lithium air battery. However, embodiments are not limited thereto. Any suitable electrochemical cell available in the art may be used.

The all-solid secondary battery will be described in further detail as an example.

### All-solid secondary battery: first type

The all-solid secondary battery may include the solid ion conductor compound. For example, an all-solid secondary battery may include: a positive electrode layer including a positive active material layer comprising a positive active material; a negative electrode layer including a negative active material layer comprising a negative active material, and a solid electrolyte layer between the positive electrode layer and the negative electrode layer and comprising a solid electrolyte, wherein at least one of the positive active material layer, or the solid electrolyte layer may include the solid ion conductor compound described above.

The all-solid secondary battery according to an embodiment may be prepared as follows.

### Solid electrolyte layer

First, a solid electrolyte layer may be prepared. The solid electrolyte layer may be prepared by mixing and drying the solid ion conductor compound described above and a binder, or by rolling a powder of the solid ion conductor compound represented by Formula 1 at a pressure of about 1 ton to about 10 tons in a specific form. The solid ion conductor compound may be used as a solid electrolyte.

An average diameter of the solid electrolyte may be, for example, in a range of about 0.5 micrometer (µm) to about 20 µm. By having such an average diameter of the solid electrolyte, the binding properties are improved during the formation of a calcined body, and the ion conductivity and lifespan characteristics of the solid electrolyte particle may be improved.

A thickness of the solid electrolyte layer may be in a range of about 10 µm to about 200 µm. By having such a thickness of the solid electrolyte layer, sufficient lithium ion mobility may be secured, and as a result, high ion conductivity may be obtained.

The solid electrolyte layer may further include a solid electrolyte, such as a sulfide-based (i.e., sulfide) solid electrolyte and/or an oxide-based (i.e., oxide) solid electrolyte, in addition to the aforementioned solid ion conductor compound.

The sulfide-based solid electrolyte in the related art may include, for example, at least one of lithium sulfide, silicon sulfide, phosphorus sulfide, or boron sulfide. The sulfide-based solid electrolyte may include at least one of Li₂S, P₂S₅, SiS₂, GeS₂, or B₂S₃. The sulfide-based solid electrolyte particle in the related art may be Li₂S or P₂S₅. The sulfide-based solid electrolyte may have higher lithium ion conductivity than other inorganic compounds. For example, the sulfide-based solid electrolyte may include Li₂S and P₂S₅. When the sulfide solid electrolyte material included in the sulfide-based solid electrolyte includes Li₂S-P₂S₅, a molar mixing ratio of Li₂S to P₂S₅ may be, for example, in a range of about 50:50 to about 90:10. In addition, Li₃PO₄, a halogen, a halogen compound, Li₂₊₂ₓZn₁₋ₓGeO₄ ("LISICON"; 0<x<1), Li_{3+y}PO₄₋ₓNₓ ("LIPON"; -3<y<3, 0<x<4), Li_{3.25}Ge_{0.25}P_{0.75}S₄ ("Thio-LISICON"), or Li₂O-Al₂O₃-TiO₂-P₂O₅ ("LATP") may be added to the sulfide-based solid electrolyte such as at least one of Li₂S-P₂S₅, SiS₂, GeS₂, or B₂S₃, to prepare an inorganic solid electrolyte. The inorganic solid electrolyte may be used as the sulfide solid electrolyte in the related art. Non-limiting examples of the sulfide solid electrolyte material in the related art may include: Li₂S-P₂S₅; Li₂S-P₂S₅-LiX (wherein X is a halogen element); Li₂S-P₂S₅-Li₂O; Li₂S-P₂S₅-Li₂O-Lil; Li₂S-SiS₂; Li₂S-SiS₂-Lil; Li₂S-SiS₂-LiBr; Li₂S-SiS₂-LiCl; Li₂S-SiS₂-B₂S₃-Lil; Li₂S-SiS₂-P₂S₅-Lil; Li₂S-B₂S₃; Li₂S -P₂S₅-ZₘSₙ (wherein m and n may each be a positive number, and Z may be Ge, Zn, or Ga); Li₂S-GeS₂; Li₂S-SiS₂-Li₃PO₄; and Li₂S-SiS₂-LiₚMO_{q} (wherein p and q may each be a positive number, and M may be P, Si, Ge, B, Al, Ga, or In). In this regard, the sulfide-based solid electrolyte material may be prepared by treating starting materials (e.g., Li₂S, or P₂S₅) of sulfide-based solid electrolyte materials by a melt quenching method, or a mechanical milling method. Also, calcination may be performed after the above treatment.

A binder included in the solid electrolyte layer may be, for example, styrene butadiene rubber (SBR), polytetrafluoroethylene, polyvinylidene fluoride, polyethylene, or polyvinyl alcohol. However, embodiments are not limited thereto. Any suitable binder available in the art may be used. The binder of the solid electrolyte layer may be identical to or different from a binder of the positive electrode layer or the negative electrode layer.

### Positive electrode layer

Next, the positive electrode layer is prepared. The positive electrode layer may be prepared by forming a positive active material layer including a positive active material on a current collector. An average diameter of the positive active material may be, for example, about 2 µm to about 10 µm.

The positive active material may be any suitable positive active material used in secondary batteries available in the art. For example, the positive active material may be lithium transition metal oxide, or transition metal sulfide. For example, the positive active material may be at least one of a composite oxide of a metal of cobalt, manganese, or nickel, and with lithium.

Examples of the positive active material may include a compound represented by at least one of: LiₐA_{1-b}B¹_{b}D¹₂ (wherein 0.90≤a≤1.8 and 0≤b≤0.5); LiₐE_{1-b}B¹_{b}O_{2-c}D¹_{c} (wherein 0.90≤a≤1.8, 0≤b≤0.5, and 0≤c≤0.05); LiE_{2-b}B¹_{b}O_{4-c}D¹_{c} (wherein 0≤b≤0.5 and 0≤c≤0.05); LiₐNi_{1-b-c}Co_{b}B¹_{c}D¹_{α} (wherein 0.90≤a≤1.8, 0≤b≤0.5, 0≤c≤0.05, and 0<α≤2); LiₐNi_{1-b-c}Co_{b}B¹_{c}O_{2-α}F¹_{α} (wherein 0.90≤a≤1.8, 0≤b≤0.5, 0≤c≤0.05, and 0<α<2); LiₐNi_{1-b-c}Co_{b}B¹_{c}O_{2-α}F¹₂ (wherein 0.90≤a≤1.8, 0≤b≤0.5, 0≤c≤0.05, and 0<α<2); LiₐNi_{1-b-c}Mn_{b}B¹_{c}D¹_{α} (wherein 0.90≤a≤1.8, 0≤b≤0.5, 0≤c≤0.05, and 0<α≤2); LiₐNi_{1-b-c}Mn_{b}B¹_{c}O_{2-α}F¹_{α} (wherein 0.90≤a≤1.8, 0≤b≤0.5, 0≤c≤0.05, and 0<α<2); LiₐNi_{1-b-c}Mn_{b}B¹_{c}O_{2-α}F¹₂ (wherein 0.90≤a≤1.8, 0≤b≤0.5, 0≤c≤0.05, and 0<α<2); LiₐNi_{b}E_{c}G_{d}O₂ (wherein 0.90≤a≤1.8, 0≤b≤0.9, 0≤c≤0.5, and 0.001≤d≤0.1); LiₐNi_{b}Co_{c}Mn_{d}GₑO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8 and 0.001≤b≤0.1); LiₐCoG_{b}O₂ (wherein 0.90≤a≤1.8 and 0.001≤b≤0.1); LiₐMnG_{b}O₂ (wherein 0.90≤a≤1.8 and 0.001≤b≤0.1); LiₐMn₂G_{b}O₄ (wherein 0.90≤a≤1.8 and 0.001≤b≤0.1); QO₂; QS₂; LiQS₂; V₂O₅; LiV₂O₂; Lil¹O₂; LiNiVO₄; Li_{(3-f)}J₂(PO₄)₃ (wherein 0≤f≤2); Li_{(3-f)}Fe₂(PO₄)₃ (wherein 0≤f≤2); or LiFePO₄. In the foregoing formulae, A may be at least one of nickel (Ni), cobalt (Co), or manganese (Mn); B¹ may be at least one of aluminum (Al), Ni, Co, Mn, chromium (Cr), iron (Fe), magnesium (Mg), strontium (Sr), vanadium (V), or a rare-earth element; D¹ may be at least one of oxygen (O), fluorine (F), sulfur (S), or phosphorus (P); E may be at least one of Co, or Mn; F¹ may be at least one of F, S, or P; G may be at least one of Al, Cr, Mn, Fe, Mg, lanthanum (La), cerium (Ce), Sr, or V; Q may be at least one of titanium (Ti), molybdenum (Mo), or Mn; I¹ may be at least one of Cr, V, Fe, scandium (Sc), or yttrium (Y); and J may be at least one of V, Cr, Mn, Co, Ni, or copper (Cu). For example, the positive active material may be LiCoO₂, LiMnₓO₂ₓ (wherein x=1 or 2), LiNi₁₋ₓMnₓO₂(wherein 0<x<1), LiNi_{1-x-y}CoₓMn_{y}O₂ (wherein 0≤x≤0.5 and 0≤y≤0.5), LiNi_{1-x-y}CoₓAl_{y}O₂ (wherein 0≤x≤0.5 and 0≤y≤0.5), LiFePO₄, TiS₂, FeS₂, TiS₃, or Fe₂S₃.

A compound added with a coating layer formed on one of these compounds may also be used, and a mixture of these compounds and a compound added with a coating layer may also be used. In an embodiment, the coating layer added on a surface of these compounds may include at least one compound of a coating element of oxide, hydroxide, oxyhydroxide, oxycarbonate, or hydroxycarbonate of the coating element. In an embodiment, these compounds of the coating layer may be amorphous or crystalline. In an embodiment, the coating element included in the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. A method of forming a coating layer may be selected within a range of not affecting physical properties of the positive active material. The coating method may be, for example, a spray coating method or a dipping method. The detailed description of the coating method is omitted herein because the method is easily understood by one of ordinary skill in the art.

The positive active material may include, for example, a lithium salt of a transition metal oxide having a layered rock salt type structure in the lithium transition metal oxide. The term "layered rock salt type structure" as used herein refers to a structure in which an oxygen atom layer and a metal atom layer are alternately and regularly arranged in <111> direction of a cubic rock salt type structure and the respective atom layer thus form a two-dimensional plane. The term "cubic rock salt type structure" as used herein refers to a NaCl type structure as one of crystal structures in which face-centered cubic lattices respectively formed of anions and cations are shifted by only a half of the ridge of each unit lattice. Examples of the lithium transition metal oxide having a layered rock salt type structure may be a ternary lithium transition metal oxide represented by LiNiₓCo_{y}Al_{z}O₂ (NCA), wherein 0<x<1, 0<y<1, 0<z<1, and x+y+z=1, or LiNi_{x'}Co_{y'}Mn_{z'}O₂ (NCM), wherein 0<x'<1, 0<y'<1, 0<z'<1, and x'+y'+z'=1. When the positive active material includes the ternary lithium transition metal oxide having a layered rock salt type structure, the all-solid secondary battery 1 may have further improved energy density and thermal stability.

According to an embodiment, the positive electrode layer may include a positive active material represented by LiNiₓCo_{y}Al_{z}O₂ or LiNi_{x'}Co_{y'}Mn_{z'}O₂, wherein 0<x<1, 0<y<1, 0<z<1, and x+y+z=1 and 0<x'<1, 0<y'<1, 0<z'<1, x'+y'+z'=1, a part or whole of a surface of the positive active material may be coated with the solid ion conductor compound, and additionally, a known lithium ion conductor compound, e.g., Li₂ZrO₃ or Li₂O-ZrO₂ (LZO) compound may be further coated thereon.

For example, when the positive active material includes nickel (Ni) as a ternary lithium transition metal oxide such as NCA or NCM, the capacity density of the all-solid secondary battery may be increased, thereby allowing a decrease in metal elution of a positive active material while charging. Consequently, the all-solid secondary battery may have improved cycle characteristics.

The positive active material may be, for example, in a particle shape, such as a spherical shape or an oval-spherical shape. A particle diameter of the positive active material is not particularly limited. The diameter may be within a range applicable to a positive active material of an all-solid secondary battery in the related art. A content of the positive active material of the positive electrode layer is not particularly limited. The content may be within a range applicable to a positive electrode layer of an all-solid secondary battery in the related art. In the positive active material layer, the content of the positive active material may be, for example, in a range of about 50 weight percent (wt%) to about 95 wt%.

The positive active material layer may further include the solid ion conductor compound.

The positive active material layer may include a binder. Examples of the binder may include, for example, styrene butadiene rubber (SBR), polytetrafluoroethylene, polyvinylidene fluoride, or polyethylene.

The positive active material layer may include a conductive agent. Examples of the conductive agent include graphite, carbon black, carbon nanotubes (CNF), acetylene black, Ketjen black, carbon fibers, or metal powder.

The positive active material layer may further include additives such as a filler, a coating agent, a dispersing agent, and an ion conductive auxiliary agent in addition to the positive active material, the solid ion conductor, binder, or conductive agent.

Moreover, the filler, the coating agent, the dispersing agent, or the ion conductive auxiliary agent that may be included in the positive active material layer may be any suitable material for an electrode in an all-solid secondary battery.

Examples of the positive electrode current collector include a plate or a foil including aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The positive electrode current collector may be omitted.

The positive electrode current collector may further include a carbon layer disposed on one side or both sides of a metal substrate. By additionally disposing the carbon layer on the metal substrate, it is possible to prevent the metal of the metal substrate from being corroded by the solid electrolyte included in the positive electrode layer and to reduce the interface resistance between the positive active material layer and the positive electrode current collector. A thickness of the carbon layer may be, for example, about 1 µm to about 5 µm. When the thickness of the carbon layer is too thin, it may be difficult to completely block the contact between the metal substrate and the solid electrolyte. When the thickness of the carbon layer is too thick, energy density of the all-solid secondary battery may decrease. The carbon layer may include amorphous carbon, or crystalline carbon.

### Negative electrode layer

Next, the negative electrode layer is prepared. The negative electrode layer may be manufactured in the same manner as the positive electrode layer, except for using a negative active material instead of the positive active material. The negative electrode layer may be prepared by forming a negative active material layer including the negative active material on a negative electrode current collector.

The negative active material layer may further include the solid ion conductor compound. The negative active material may be at least one of lithium metal, or a lithium metal alloy. The negative active material layer may further include a negative active material in the related art, in addition to at least one of the lithium metal, or the lithium metal alloy. The negative active material in the related art may include, for example, at least one of a metal alloyable with lithium, a transition metal oxide, a non-transition metal oxide, or a carbonaceous material. Examples of the metal alloyable with lithium include gold (Au), silver (Ag), silicon (Si), tin (Sn), aluminum (Al), germanium (Ge), lead (Pb), bismuth (Bi), antimony (Sb), a Si-Y alloy (wherein Y is at least one of an alkali metal, an alkaline earth metal, a Group 13 element, a Group 14 element, a Group 15 element, a Group 16 element, a transition metal, or a rare earth element, and Y is not Si), or a Sn-Y alloy (wherein Y is at least one of an alkali metal, an alkaline earth-metal, a Group 13 element, a Group 14 element, a Group 15 element, a Group 16 element, a transition metal, or a rare earth element, and Y is not Sn). Y may be at least one of magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), thallium (Tl), germanium (Ge), phosphorus (P), arsenic (As), antimony (Sb), bismuth (Bi), sulfur (S), selenium (Se), tellurium (Te), or polonium (Po). For example, the transition metal oxide may be a lithium titanium oxide, a vanadium oxide, or a lithium vanadium oxide. The non-transition metal oxide may be, for example, SnO₂, or SiOₓ (wherein 0<x<2). Examples of the carbonaceous material may include crystalline carbon, amorphous carbon, and a mixture thereof. Examples of the crystalline carbon may include graphite, such as natural graphite or artificial graphite that are in shapeless, plate, flake, spherical, or fibrous form. Examples of the amorphous carbon may include soft carbon (carbon sintered at low temperatures), hard carbon, meso-phase pitch carbides, and sintered cokes.

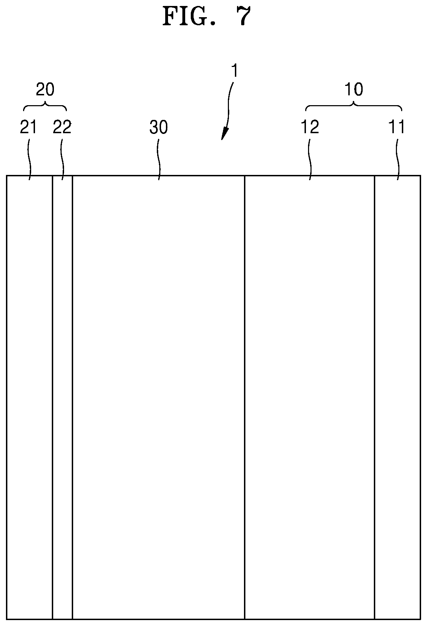

As shown in FIG. 7, an all-solid secondary battery 1 according to an embodiment may include a solid electrolyte layer 30, a positive electrode layer 10 on a surface of the solid electrolyte layer 30, and a negative electrode layer 20 on another surface of the solid electrolyte layer 30. The positive electrode layer 10 may include a positive active material layer 12 in contact with the solid electrolyte layer 30 and a positive electrode current collector 11 in contact with the positive active material layer 12, and the negative electrode layer 20 may include a negative active material layer 22 in contact with the solid electrolyte layer 30 and a negative electrode current collector 21 in contact with the negative active material layer 22. The all-solid secondary battery 1 may be completed by, for example, disposing the positive active material layer 12 on a first side of the solid electrolyte layer 30, and disposing the negative active material layer 22 on a second side of the solid electrolyte layer 30, and disposing the positive electrode current collector 11 and the negative electrode current collector 21 on the positive active material layer 12 and the negative active material layer 22, respectively. In an embodiment, the all-solid secondary battery 1 may be completed by, for example, sequentially disposing on the negative electrode current collector 21, the negative active material layer 22, the solid electrolyte layer 30, the positive active material layer 12, and the positive electrode current collector 11.

The positive electrode layer and the solid electrolyte layer may be prepared in the same manner as in the manufacture of the all-solid secondary battery.

The negative electrode layer 20 may include the negative electrode current collector 21 and the negative active material layer 22 on the negative electrode current collector 21, wherein the negative active material layer 22 may include, for example, a negative active material and a binder.

A negative active material included in the negative active material layer 22 may have, for example, a particle shape. An average particle diameter of the negative active material having the particle shape may be, for example, 4 µm or less, 3 µm or less, 2 µm or less, 1 µm or less, or 900 nm or less. The average particle diameter of the negative active material having the particle shape may be, for example, about 10 nm to about 4 µm, about 10 nm to about 3 µm, about 10 nm to about 2 µm, about 10 nm to about 1 µm, or about 10 nm to about 900 nm. When the negative active material has the average particle diameter within any of these ranges, upon charging and discharging of a battery, reversible absorbing and/or desorbing of lithium may be facilitated. The average particle diameter of the negative active material may be, for example, a median diameter (D50) measured by a laser particle-size analyzer.

The negative active material included in the negative active material layer 22 may include, for example, at least one of a carbonaceous negative active material, a metal or metalloid negative active material.

The carbonaceous negative active material may be amorphous carbon. Amorphous carbon may be, for example, carbon black (CB), acetylene black (AB), furnace black (FB), ketjen black (KB), or graphene. But embodiments are not limited thereto. Any suitable amorphous carbon used in the art may be used. Amorphous carbon is carbon that does not have crystallinity or has very low crystallinity, and is distinguished from crystalline carbon or graphite-based (i.e., graphite) carbon.

A metal or metalloid negative active material may be gold (Au), platinum (Pt), palladium (Pd), silicon (Si), silver (Ag), aluminum (Al), bismuth (Bi), tin (Sn), or zinc (Zn), but embodiments are not limited thereto. Any suitable metal negative active material or metalloid negative active material available in the art capable of forming an alloy or compound with lithium may be used. For example, nickel (Ni) does not form an alloy with lithium and thus is not a metal negative active material.

The negative active material layer 22 may include the aforementioned negative active material or may include a mixture of a plurality of different negative active material. For example, the negative active material layer 22 may only include amorphous carbon or include at least one of gold (Au), platinum (Pt), palladium (Pd), silicon (Si), silver (Ag), aluminum (Al), bismuth (Bi), tin (Sn), or zinc (Zn). For example, the negative active material layer 22 may include a mixture of amorphous carbon and at least one of gold (Au), platinum (Pt), palladium (Pd), silicon (Si), silver (Ag), aluminum (Al), bismuth (Bi), tin (Sn), or zinc (Zn). The ratio of the mixture of amorphous carbon to gold or the like may be a weight ratio, for example, in a range of about 10:1 to about 1:2, about 5:1 to about 1:1, or about 4:1 to about 2:1, but embodiments are not limited thereto. The ratio may be selected according to desired characteristics of the all-solid secondary battery 1. As the negative active material layer may have such a composition, cycle characteristics of the all-solid secondary battery 1 may be further improved.

The negative active material included in the negative active material layer 22 may include, for example, a mixture of a first particle of amorphous carbon and a second particle of metal or metalloid. Examples of the metal or metalloid may include gold (Au), platinum (Pt), palladium (Pd), silicon (Si), silver (Ag), aluminum (Al), bismuth (Bi), tin (Sn), or zinc (Zn). In an embodiment, the metalloid may be a semiconductor. A content of the second particle may be in a range of about 8 wt% to about 60 wt%, about 10 wt% to about 50 wt%, about 15 wt% to about 40 wt%, or about 20 wt% to about 30 wt%, based on the total weight of the mixture. When the second particle has the content within any of these ranges, for example, cycle characteristics of the all-solid secondary battery 1 may be further improved.

The binder included in the negative active material layer 22 may be, for example, styrene-butadiene rubber (SBR), polytetrafluoroethylene, polyfluoride vinylidene, polyethylene, vinylidenefluoride/hexafluoropropylene copolymer, polyacrylonitrile, or polymethyl methacrylate. However, embodiments are not limited thereto. Any suitable binder available in the art may be used. The binder may include single or multiple different binders.

As the negative active material layer 22 includes the binder, the negative active material layer 22 may be stabilized on the negative electrode current collector 21. In addition, cracks in the negative active material layer 22 may be suppressed despite a change in volume and/or relative position of the negative active material layer 22 during charging and discharging. For example, when the negative active material layer 22 does not include the binder, the negative active material layer 22 may be easily separated from the negative electrode current collector 21. Due to the separation of the negative active material layer 22 from the negative electrode current collector 21, in a portion where the negative electrode current collector 21 is exposed, a possibility of an occurrence of a short circuit may increase due to a contact of the negative electrode current collector with the solid electrolyte layer 30. The negative active material layer 22 may be prepared by coating a slurry in which materials of the negative active material layer 22 are dispersed on the negative electrode current collector 21 and drying the slurry. By including the binder in the negative active material layer 22, the negative active material may be stably dispersed in the slurry. For example, when the slurry is coated onto the negative electrode current collector 21 by screen printing, screen blockage (e.g., blockage due to agglomeration of a negative active material) may be prevented.

The negative active material layer 22 may further include an additive used in the all-solid secondary battery 1 in the related art, such as a filler, a coating agent, a dispersing agent, or an ion conductive auxiliary agent.

A thickness of the negative active material layer 22 may be, for example, 50 % or less, 40 % or less, 30 % or less, 20 % or less, 10 % or less, or 5 % or less than a thickness of the positive active material layer 12. The thickness of the negative active material layer 22 may be, for example, in a range of about 1 µm to about 20 µm, about 2 µm to about 10 µm, or about 3 µm to about 7 µm. When the thickness of the negative active material layer 22 is too thin, lithium dendrite formed between the negative active material layer 22 and the negative electrode current collector 21 may collapse the negative active material layer 22, thus not improving cycle characteristics of the all-solid secondary battery 1. When the thickness of the negative active material layer 22 is too thick, the all-solid secondary battery 1 may have deteriorated energy density and increased internal resistance by the negative active material layer 22, thus not improving cycle characteristics of the all-solid secondary battery 1.

When the thickness of the negative active material layer 22 is decreased, for example, a charge capacity of the negative active material layer 22 may also decrease. The charge capacity of the negative active material layer 22 may be, for example, 50 % or less, 40 % or less, 30 % or less, 20 % or less, 10 % or less, 5 % or less, or 2% or less than a charge capacity of the positive active material layer 12. The charge capacity of the negative active material layer 22 may be, for example, in a range of about 0.1 % to about 50 %, about 0.1 % to about 40 %, about 0.1 % to about 30 %, about 0.1 % to about 20 %, about 0.1 % to about 10 %, about 0.1 % to about 5 %, or about 0.1 % to about 2 % of the charge capacity of the positive active material layer 12. When the charge capacity of the negative active material layer 22 is too small, the thickness of the negative active material layer 22 may be too thin, and during repeated charging and discharging, lithium dendrite formed between the negative active material layer 22 and the negative electrode current collector 21 may collapse the negative active material layer 22, thus not improving cycle characteristics of the all-solid secondary battery 1. When the charge capacity of the negative active material layer 22 is too great, the all-solid secondary battery 1 may have deteriorated energy density and increased internal resistance by the negative active material layer 22, thus not improving cycle characteristics of the all-solid secondary battery 1.

The charge capacity of the positive active material layer 12 may be obtained by multiplying a specific charge capacity (milliampere-hours per gram, mAh/g) of a positive active material by a mass of the positive active material in the positive active material layer 12. When various positive active materials are used, values of the specific charge capacity × mass for respective positive active materials may be obtained. A sum of these values may be the charge capacity of the positive active material layer 12. The charge capacity of the negative active material layer 22 may also be calculated in the same manner. The charge capacity of the negative active material layer 22 may be obtained by multiplying a specific charge capacity (mAh/g) of a negative active material to a mass of the negative active material in the negative active material layer 22. When various negative active materials are used, values of the specific charge capacity × mass for respective negative active materials may be obtained. A sum of these values may be the charge capacity of the negative active material layer 22. Here, the specific charge capacity of the positive active material and the specific charge capacity of the negative active material are each a capacity estimated using an all-solid half-cell in which lithium metal is used as a counter electrode. By measuring the charge capacity using the all-solid half-cell, the charge capacity of each of the positive active material layer 12 and the negative active material layer 22 may be directly measured. When dividing the resulting respective charge capacity by a mass of each active material, the specific charge capacity may be obtained. The charge capacity of the positive active material layer 12 and the charge capacity of the negative active material layer 22 may each be an initial charge capacity measured at a 1st charging cycle.

### All-solid secondary battery: second type

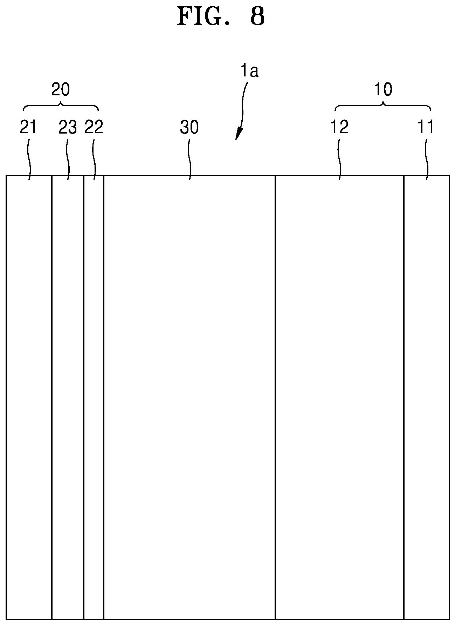

As shown in FIG. 8, an all-solid secondary battery 1a may include, for example: a positive electrode layer 10 including a positive active material layer 12 on a positive electrode current collector 11; a negative electrode layer 20 including a negative active material layer 22 on a negative electrode current collector 21; and an electrolyte layer 30 between the positive electrode layer 10 and the negative electrode layer 20, wherein the positive active material layer 12 and/or the electrolyte layer 30 may include the solid ion conductor compound described above. The all-solid secondary battery 1a may further include, for example, a metal layer 23 between the negative electrode current collector 21 and the negative active material layer 22. The metal layer 23 may include lithium or a lithium alloy.

The all-solid secondary battery according to an embodiment may be prepared as follows. The positive electrode layer and the solid electrolyte layer may be prepared in the same manner as in the manufacture of the all-solid secondary battery. As shown in FIG. 8, in the all-solid secondary battery 1a, the metal layer 23 may be, for example, located between the negative electrode current collector 21 and the negative active material layer 22 before assembling the all-solid secondary battery 1a, or the metal layer 23 may be precipitated at between the negative electrode current collector 21 and the negative active material layer 22 by charging after assembling the all-solid secondary battery 1a. Prior to assembling the all-solid secondary battery 1a, when the metal layer 23 is located between the negative electrode current collector 21 and the negative active material layer 22, as the metal layer 23 is a metal layer including lithium, the metal layer 23 may serve as a lithium reservoir. For example, before assembling the all-solid secondary battery 1a, a lithium foil may be placed between the negative electrode current collector 21 and the negative active material layer 22.

The metal layer 23 may include the lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy, but embodiments are not limited thereto. Any suitable lithium alloy available in the art used as a lithium alloy may be used. The metal layer 23 may comprise one of the alloys, lithium, or several types of alloys.

A thickness of the lithium alloy is not particularly limited, but for example, may be in a range of about 1 µm to 1,000 µm, 1 µm to 500 µm, 1 µm to 200 µm, 1 µm to 150 µm, 1 µm to 100 µm, or 1 µm to 50 µm. When the thickness of the metal layer 23 is too thin, it may be difficult for the metal layer 23 to serve as the lithium reservoir. When the thickness of the metal layer 23 is too thick, a mass and a volume of the all-solid secondary battery 1a may increase, thus deteriorating cycle characteristics of the all-solid secondary battery 1a. The metal layer 23 may be, for example, a metal foil having a thickness within this range.

Cycle characteristics of the all-solid secondary battery 1a containing the metal layer may be further improved. When precipitating the metal layer 23 by charging after assembling the all-solid secondary battery 1a, as the all-solid secondary battery 1a does not include the metal layer 23 upon assembling, and thus, the energy density of the all-solid secondary battery 1a may increase. For example, when charging the all-solid secondary battery 1a, charging may be performed in excess of the charging capacity of the negative active material layer 22. That is, the negative active material layer 22 may be overcharged. In early charging, the negative active material layer 22 may be intercalated with lithium. That is, the negative active material included in the negative active material layer 22 may form an alloy or compound with lithium ions that have migrated from the positive electrode layer 10. When charging exceeds the capacity of the negative active material layer 22, for example, lithium is precipitated at a back surface of the negative active material layer 22, that is, between the negative electrode current collector 21 and the negative active material layer 22. A metal layer corresponding to the metal layer 23 may be formed by the precipitated lithium. The metal layer 23 may be a metal layer mainly comprising lithium (i.e., lithium metal). These results, for example, are obtained when the negative active material included in the negative active material layer 22 comprises a material forming an alloy or compound with lithium. Upon discharge, lithium in the metal layer, i.e., the negative active material layer 22 and the metal layer 23, may be ionized and move toward the positive electrode layer 10. Thus, lithium may be used as a negative active material in the all-solid secondary battery 1a. Also, the negative active material layer 22 may cover the metal layer 23 such that the negative active material layer 22 may serve as a protective layer for the metal layer 23 and may suppress a deposition and a growth of a dendrite. Therefore, short circuit and capacity degradation of the all-solid secondary battery 1a may be suppressed, and as a result, cycle characteristics of the all-solid secondary battery 1a may be improved. In addition, when the metal layer 23 is disposed by charging after assembling the all-solid secondary battery 1a, an area between the negative electrode current collector 21 and the negative active material layer 22 may be, for example, a Li metal-free area that may not contain lithium (Li) metal in an initial state or after discharge state of the all-solid secondary battery 1a.

For example, the negative electrode current collector 21 may include materials that are not reactive to lithium and do not form an alloy or a compound with lithium. Materials of the negative electrode current collector 21 may include, for example, copper (Cu), stainless steel, titanium (Ti), iron (Fe), cobalt (Co), or nickel (Ni), but embodiments are not limited thereto. Any suitable electrode current collector available in the art may be used. The negative electrode current collector 21 may include one type of the metal described above, or an alloy of at least two metals or a coating material. The negative electrode current collector 21 may be, for example, in a plate shape or a foil shape.

The all-solid secondary battery 1a may further include, for example, a thin film (not shown) including an element capable of forming an alloy with lithium on the negative electrode current collector 21. The thin film may be located between the negative electrode current collector 21 and the negative active material layer 22. The thin film may include, for example, an element capable of forming an alloy with lithium. The element capable of forming the alloy with lithium may be, for example, gold, silver, zinc, tin, indium, silicon, aluminum, or bismuth, but are not necessarily limited thereto. Any suitable element that may form an alloy with lithium may be used. The thin film may include one of these metals or an alloy of several types of metals. By placing the thin film on the negative electrode current collector 21, for example, the deposition form of the metal layer 23 precipitated at between the thin film and the negative active material layer 22 is further flattened, thus further improving cycle characteristics of the all-solid secondary battery 1a.

A thickness of the thin film may be, for example, in a range of about 1 nanometer (nm) to about 800 nm, about 10 nm to about 700 nm, about 50 nm to about 600 nm, or about 100 nm to about 500 nm. When the thickness of the thin film is less than 1 nm, it may be difficult to exhibit the function of the thin film. When the thickness of the thin film is too thick, the thin film itself intercalate lithium, and the amount of lithium deposited in the negative electrode decreases, thus reducing the energy density of the all-solid battery and degrading cycle characteristics of the all-solid secondary battery 1a. The thin film may be disposed on the negative electrode current collector 21 by, for example, a vacuum deposition method, a sputtering method, or a plating method, but is not necessarily limited thereto. Any suitable method capable of forming a thin film in the art may be used.

Hereinafter the inventive concept will be described in detail with reference to Examples and Comparative Examples. These examples are for illustrative purposes only and are not intended to limit the scope of the inventive concept.

### EXAMPLES

### Preparation of solid ion conductor compound

### Example 1

In a glove box in an Ar atmosphere, ZrCl₄ as a halide compound containing an M' element, LiCl as a halide compound containing an M element, and Li₃(PO₄) as a compound containing a Z anion were added to a planetary ball mill at a stoichiometric ratio of 1:1.95:0.05, followed by addition of zirconia (YSZ) balls. Then, after pulverizing and mixing at 400 rpm in an Ar atmosphere for 15 minutes, a cycle having a rest period of 5 minutes was repeatedly performed for 48 hours to obtain a solid ion conductor compound having the composition shown in Table 1 below. Subsequently, the solid ion conductor compound obtained for X-ray diffraction (XRD) analysis was pressed at a uniaxial pressure of 350 megaPascals (MPa) to prepare pellets having a thickness of about 10 millimeters (mm) and a diameter of about 13 mm.

### Example 2

A solid ion conductor compound was obtained in the same manner as in Example 1, except that a stoichiometric ratio of ZrCl₄, LiCI, and Li₃(PO₄) was 1:1.99:0.01, followed by pressing to prepare pellets thereof.

### Example 3

A solid ion conductor compound was obtained in the same manner as in Example 1, except that a stoichiometric ratio of ZrCl₄, LiCI, and Li₃(PO₄) was 1:1.98:0.02, followed by pressing to prepare pellets thereof.

### Example 4

A solid ion conductor compound was obtained in the same manner as in Example 1, except that a stoichiometric ratio of ZrCl₄, LiCI, and Li₃(PO₄) was 1:1.96:0.04, followed by pressing to prepare pellets thereof.

### Example 5

A solid ion conductor compound was obtained in the same manner as in Example 1, except that a stoichiometric ratio of ZrCl₄, LiCI, and Li₃(PO₄) was 1:1.94:0.06, followed by pressing to prepare pellets thereof.

### Example 6

A solid ion conductor compound was obtained in the same manner as in Example 1, except that a stoichiometric ratio of ZrCl₄, LiCI, and Li₃(PO₄) was 1:1.9:0.1, followed by pressing to prepare pellets thereof.

### Example 7

A solid ion conductor compound was obtained in the same manner as in Example 1, except that a stoichiometric ratio of ZrCl₄, LiCI, Li₃(PO₄), and YCl₃ was 0.8:1.95:0.05:0.2, followed by pressing to prepare pellets thereof.

### Example 8

A solid ion conductor compound was obtained in the same manner as in Example 1, except that a stoichiometric ratio of ZrCl₄, LiCI, Li₃(PO₄), and YCl₃ was 0.5:1.95:0.05:0.5, followed by pressing to prepare pellets thereof.

### Example 9

A solid ion conductor compound was obtained in the same manner as in Example 1, except that a stoichiometric ratio of ZrCl₄, LiCl, and Li₃(PS₄) was 1:1.95:0.05, followed by pressing to prepare pellets thereof.

### Example 10

A solid ion conductor compound was obtained in the same manner as in Example 1, except that a stoichiometric ratio of ZrCl₄, LiCI, and Li₃(PO₄) was 1:1.89:0.11, followed by pressing to prepare pellets thereof.

### Example 11

A solid ion conductor compound was obtained in the same manner as in Example 1, except that a stoichiometric ratio of ZrCl₄, LiCI, and Li₃(PO₄) was 1:1.88:0.12, followed by pressing to prepare pellets thereof.

### Example 12

A solid ion conductor compound was obtained in the same manner as in Example 1, except that a stoichiometric ratio of ZrCl₄, LiCI, and Li₃(PO₄) was 1:1.85:0.15, followed by pressing to prepare pellets thereof.

### Example 13

A solid ion conductor compound was obtained in the same manner as in Example 1, except that a stoichiometric ratio of ZrCl₄, LiCI, and Li₃(PO₄) was 1:1.8:0.2, followed by pressing to prepare pellets thereof.

### Example 14

A solid ion conductor compound was obtained in the same manner as in Example 1, except that a stoichiometric ratio of ZrCl₄, LiCl, and Li₃(PS₄) was 1:1.7:0.3, followed by pressing to prepare pellets thereof.

### Comparative Example 1

A solid ion conductor compound having the composition as shown in Table 1 was obtained in the same manner as in Example 1, except that a stoichiometric ratio of ZrCl₄ and LiCl as raw materials was 1:2, followed by pressing to prepare pellets thereof.

### Comparative Example 2

A solid ion conductor compound having the composition as shown in Table 1 was obtained in the same manner as in Example 1, except that a stoichiometric ratio of YCl₃ and LiCl as raw materials was 1:3, followed by pressing to prepare pellets thereof.

### Comparative Example 3

A solid ion conductor compound was obtained in the same manner as in Example 1, except that a stoichiometric ratio of ZrCl₄, LiCI, and Li₂O was 1:1.95:0.05, followed by pressing to prepare pellets thereof.

### Comparative Example 4

A solid ion conductor compound was obtained in the same manner as in Example 1, except that a stoichiometric ratio of YCl₃, LiCl, and Li₂O was 1:2.95:0.05, followed by pressing to prepare pellets thereof.

### Comparative Example 5

A solid ion conductor compound was obtained in the same manner as in Example 1, except that a stoichiometric ratio of ZrCl₄, LiCI, and Li₂(SO₄) was 1:1.95:0.05, followed by pressing to prepare pellets thereof.

### Comparative Example 6

A solid ion conductor compound was obtained in the same manner as in Example 1, except that a stoichiometric ratio of ZrCl₄, LiCl, and LiNO₃ was 1:1.95:0.05, followed by pressing to prepare pellets thereof.

### Comparative Example 7

A solid ion conductor compound was obtained in the same manner as in Example 1, except that a stoichiometric ratio of ZrCl₄, LiCI, and Li₃(PO₄) was 1:1.6:0.4, followed by pressing to prepare pellets thereof.

### Preparation of all-solid secondary battery

### Example 15

### Preparation of positive electrode layer

As a positive active material, LiNi_{0.9}Co_{0.05}Mn_{0.05}O₂ (NCM) was coated with Li₂ZrO₃ (LZO) to prepare a LZO-NCM positive active material. The pellets of the solid ion conductor compound prepared in Example 1 were pulverized as a solid electrolyte to prepare powder. Carbon nanofibers (CNF) were prepared as a conductive agent. The LZO-NCM positive active material, solid electrolyte, and conductive agent were mixed at a weight ratio of 60:52:5 to prepare a positive electrode mixture.

The prepared positive electrode mixture was coated on a current collector and the coated current collector was dried to prepare a positive electrode layer. Then, a positive electrode layer with a thickness of 50 µm and a diameter of 11 mm was prepared by using a punching machine having a diameter of 11 mm.

### Preparation of solid electrolyte

The solid ion conductor compound prepared in Example 1 was pulverized by using an agate mortar, and the solid electrolyte powder was pressed with a uniaxial pressure of 200 MPa to prepare pellets of the solid electrolyte with a thickness of about 500 µm and a diameter of about 13 mm.

In addition, the solid electrolyte Li₆PS₅Cl, available from Mitsui, was prepared.

### Preparation of negative electrode layer

A metal lithium foil with a thickness of 20 µm was prepared as a negative electrode.

### Preparation of all-solid secondary battery

A negative electrode layer, the Li₆PS₅Cl solid electrolyte, the solid electrolyte prepared as above, and a positive electrode layer were sequentially stacked on a steel use stainless (SUS) base electrode. Then, pressurization by using a cold isotactic pressing (CIP) machine with a pressure of 300 MPa was performed thereon for 3 minutes, thereby preparing an all-solid secondary battery.

### Comparative Example 8

### Preparation of positive electrode layer

As a positive active material, LiNi_{0.9}Co_{0.05}Mn_{0.05}O₂ (NCM) was coated with Li₂ZrO₃ (LZO) to prepare a LZO-NCM positive active material. The pellets of the solid ion conductor compound prepared in Comparative Example 1 were pulverized as a solid electrolyte to prepare powder. Carbon nanofibers (CNF) were prepared as a conductive agent. The positive active material, solid electrolyte, and conductive agent were mixed at a weight ratio of 60:52:5 to prepare a positive electrode mixture.

The prepared positive electrode mixture was coated on a current collector and the coated current collector was dried to prepare a positive electrode layer. Then, a positive electrode layer with a thickness of 50 µm and a diameter of 11 mm was prepared by using a punching machine having a diameter of 11 mm.

### Preparation of solid electrolyte

The solid ion conductor compound prepared in Comparative Example 1 was pulverized by using an agate mortar, and the solid electrolyte powder was pressed with a uniaxial pressure of 200 MPa to prepare pellets of the solid electrolyte with a thickness of about 500 µm and a diameter of about 13 mm.

In addition, the Li₆PS₅Cl solid electrolyte (Li₆PS₅Cl available from Mitsui) was prepared.

### Preparation of negative electrode layer

A metal lithium foil with a thickness of 20 µm was prepared as a negative electrode.

### Preparation of all-solid secondary battery

A negative electrode layer, the Li₆PS₅Cl solid electrolyte, the solid electrolyte prepared as above, and a positive electrode layer were sequentially stacked on a SUS base electrode. Then, pressurization by using a CIP machine with a pressure of 300 MPa was performed thereon for 3 minutes, thereby preparing an all-solid secondary battery.

### Comparative Example 9

### Preparation of positive electrode layer

As a positive active material, LiNi_{0.9}Co_{0.05}Mn_{0.05}O₂ (NCM) was coated with Li₂ZrO₃ (LZO) to prepare a LZO-NCM positive active material. A known solid electrolyte (Li₆PS₅Cl available from Mitsui) was prepared as a solid electrolyte. Carbon nanofibers (CNF) were prepared as a conductive agent. The positive active material, solid electrolyte, and conductive agent were mixed at a weight ratio of 60:30:5 to prepare a positive electrode mixture.

The prepared positive electrode mixture was coated on a current collector and the coated current collector was dried to prepare a positive electrode layer. Then, a positive electrode layer with a thickness of 50 µm and a diameter of 11 mm was prepared by using a punching machine having a diameter of 11 mm.

### Preparation of solid electrolyte

A known solid electrolyte (Li₆PS₅Cl available from Mitsui) was prepared.

### Preparation of negative electrode layer

A metal lithium foil with a thickness of 20 µm was prepared as a negative electrode.

### Preparation of all-solid secondary battery

A negative electrode layer, the Li₆PS₅Cl solid electrolyte, and a positive electrode layer were sequentially stacked on a SUS base electrode. Then, pressurization by using a CIP machine with a pressure of 300 MPa was performed thereon for 3 minutes, thereby preparing an all-solid secondary battery.

### Evaluation Example 1: X-ray photoelectron spectroscopy (XPS) analysis

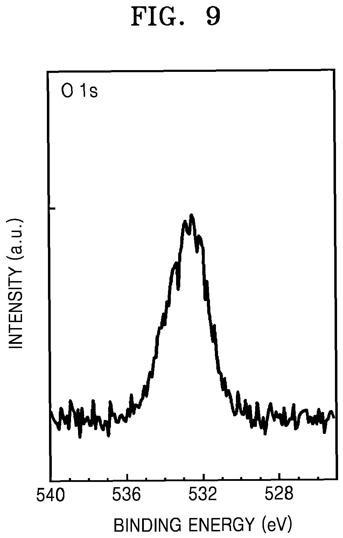

The solid ion conductor compound prepared in Example 1 was pulverized by using an agate mortar to prepare powder. The XPS analysis was performed on the powder, and the results thereof are shown in FIG. 9.

As shown in FIG. 9, in an XPS graph, a peak derived from element "O" was observed at 534 electronvolts (eV), which proves the presence of PO₄ anion.

### Evaluation Example 2: X-ray diffraction analysis

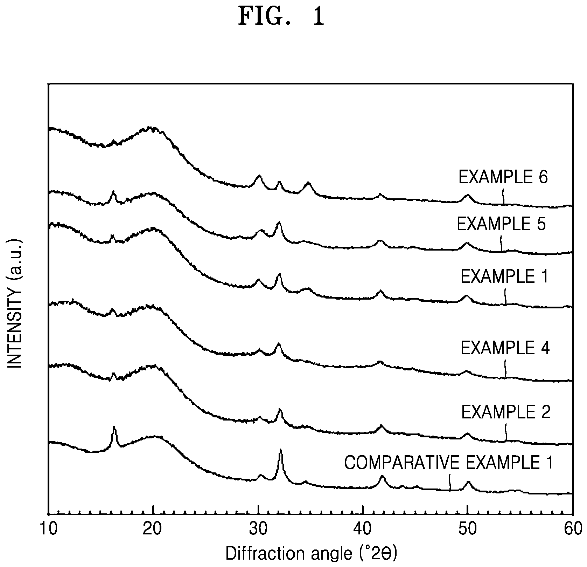

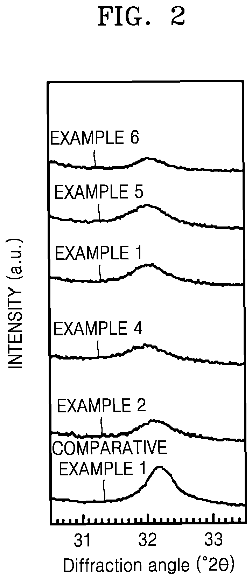

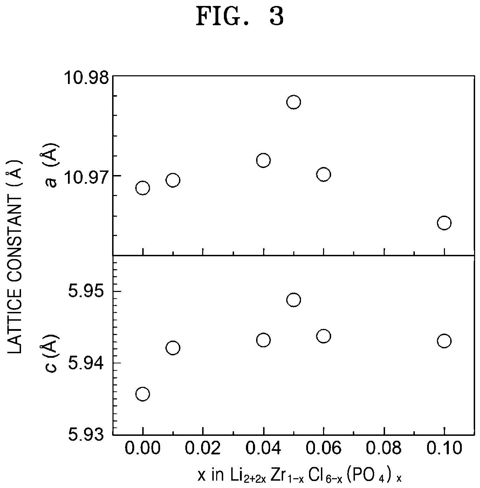

The solid ion conductor compounds prepared in Examples 1, 2, 4, 5, and 6 were pulverized by using an agate mortar to prepare powder, and the XRD spectrum of the powder was measured. The results thereof are shown in FIG. 1. The peak position and the change in full width at half maximum (FWHM) at a diffraction angle of 32.3°2θ are shown in FIG. 2. The calculated lattice constants of the crystalline structure are shown in FIG. 3.

As shown in FIGS. 1 to 3, each of the solid ion conductor compounds of Examples 1, 2, 4, 5, and 6 included the same P3-m1 space group crystalline structure, and as the lattice constant increased due to introduction of PO₄³⁻ anion, the lattice volume increased by about 0.4 %.

### Evaluation Example 3: Measurement of ion conductivity

The solid ion conductor compounds prepared in Examples 1 to 6 and 10 to 14, and Comparative Example 1, were pulverized by using agate mortar to prepare powder. The powder was pressurized with a pressure of 4 tons per square centimeter (ton/cm²) for 2 minutes to thereby prepare pellet samples having a thickness of about 1 mm and a diameter of about 13 mm. The prepared samples were sputtered with platinum (Pt) on both sides to form platinum (Pt) electrodes having a thickness of 10 µm and a diameter of 13 mm disposed on both sides, thereby preparing a symmetry cell. The preparation of the symmetry cell was performed in a glovebox in an Ar atmosphere.

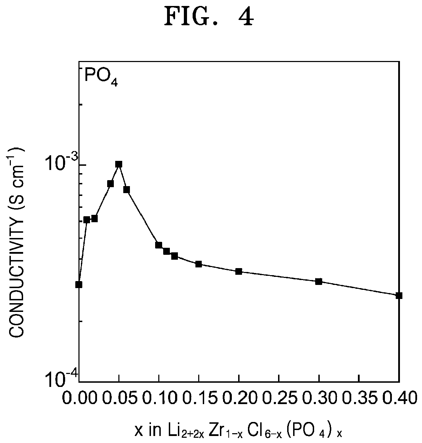

The impedance of the pellets was measured by a two-probe method using an impedance analyzer (Material Mates 7260 impedance analyzer) for the samples with platinum electrodes disposed on both sides. The frequency range was 1 hertz (Hz) to 1 megahertz (MHz), and the amplitude voltage was 10 millivolts (mV). The measurement was performed in an Ar atmosphere at a temperature of 25 °C. The resistance value was obtained from the arc of the Nyquist plot for the impedance measurement results, and the ion conductivity was calculated considering the area and thickness of the samples. The results of measurement are shown in Table 1. Furthermore, the change of ion conductivity according to the change of p value is shown in FIG. 4.

**Table 1**

| | Composition | 3+m+(l-1)o+2p | n | 3+m+kn-lo-3p+q | **p** | Ion conductivity (Scm⁻¹) |
|---|---|---|---|---|---|---|
| Example 1 | Li_{2.1}ZrCl_{5.95}(PO₄)_{0.05} | 2.1 | 1 | 5.95 | 0.05 | 1.0×10⁻³ |
| Example 2 | Li_{2.02}ZrCl_{5.99}(PO₄)_{0.01} | 2.02 | 1 | 5.99 | 0.01 | 5.6×10⁻⁴ |
| Example 3 | Li_{2.04}ZrCl_{5.98}(PO₄)_{0.02} | 2.04 | 1 | 5.98 | 0.02 | 5.7×10⁻⁴ |
| Example 4 | Li_{2.08}ZrCl_{5.96}(PO₄)_{0.04} | 2.08 | 1 | 5.96 | 0.04 | 8.2×10⁻⁴ |
| Example 5 | Li_{2.12}ZrCl_{5.94}(PO₄)_{0.06} | 2.12 | 1 | 5.94 | 0.06 | 7.7×10⁻⁴ |
| Example 6 | Li_{2.2}ZrCl_{5.9}(PO₄)_{0.1} | 2.2 | 1 | 5.9 | 0.1 | 3.2×10⁻⁴ |
| Example 7 | Li_{2.15}Zr_{0.8}Y_{0.2}Cl_{5.95}(PO₄)_{0.05} | 2.15 | 0.8+0.2 | 5.95 | 0.05 | 1.2×10⁻³ |
| Example 8 | Li_{2.45}Zr_{0.5}Y_{0.5}Cl_{5.95}(PO₄)_{0.05} | 2.45 | 0.5+0.5 | 5.95 | 0.05 | 1.1×10⁻³ |
| Example 9 | Li_{2.1}ZrCl_{5.95}(PS₄)_{0.05} | 2.1 | 1 | 5.95 | 0.05 | 4.2×10⁻⁴ |
| Example 10 | Li_{2.22}ZrCl_{5.89}(PO₄)_{0.11} | 2.22 | 1 | 5.89 | 0.11 | 4.0×10⁻⁴ |
| Example 11 | Li_{2.24}ZrCl_{5.88}(PO₄)_{0.12} | 2.24 | 1 | 5.88 | 0.12 | 3.8×10⁻⁴ |
| Example 12 | Li_{2.3}ZrCl_{5.85}(PO₄)_{0.15} | 2.3 | 1 | 5.85 | 0.15 | 3.5×10⁻⁴ |
| Example 13 | Li_{2.4}ZrCl_{5.8}(PO₄)_{0.2} | 2.4 | 1 | 5.8 | 0.2 | 3.2×10⁻⁴ |
| Example 14 | Li_{2.6}ZrCl_{5.7}(PO₄)_{0.3} | 2.4 | 1 | 5.7 | 0.3 | 2.9×10⁻⁴ |
| Comparative Example 1 | Li₂ZrCl₆ | 2 | 1 | 6 | 0 | 2.8×10⁻⁴ |
| Com parative Example 2 | Li₃YCl₆ | 3 | 1 | 6 | 0 | 2.0×10⁻⁴ |
| Com parative Example 3 | Li_{2.05}ZrCl_{5.95}O_{0.05} | 2.05 | 1 | 5.95 | 0.05 | 2.2×10⁻⁵ |
| Com parative Example 4 | Li_{3.05}YCl_{5.95}O_{0.05} | 3.05 | 1 | 5.95 | 0.05 | 1.8×10⁻⁵ |
| Com parative Example 5 | Li_{2.05}ZrCl_{5.95}(SO₄)_{0.05} | 2.05 | 1 | 5.95 | 0.05 | 2.2×10⁻⁴ |
| Com parative Example 6 | Li₂ZrCl_{5.95}(NO₃)_{0.05} | 2 | 1 | 5.95 | 0.05 | 2.5×10⁻⁴ |
| Com parative Example 7 | Li_{2.8}ZrCl_{5.6}(PO₄)_{0.4} | 2.8 | 1 | 5.6 | 0.4 | 2.5×10⁻⁴ |

Referring to Table 1 and FIG. 4, the Example in which the trivalent anion was introduced showed significantly improved ion conductivity as compared with a case where the trivalent anion was not substituted (Comparative Example 1) or the monovalent or divalent anion was substituted (Comparative Examples 3 to 6). In addition, it was confirmed that the trivalent anion had an improved ion conductivity in a range of greater than 0 and 0.3 or less.

### Evaluation Example 4: Cycle evaluation

Charge/discharge characteristics of the all-solid secondary batteries of Example 15 and Comparative Example 8 were evaluated by the following charge/discharge test.

In the first cycle of the charge/discharge test at room temperature (25 °C), charging was performed until the battery voltage reached 4.2 V with a constant current of 0.1 C and a constant voltage of 4.2 V until the current value reached 0.1 C. Subsequently, the battery was discharged with a constant current of 0.1 C until the battery voltage reached 2.5 V. The C rate is a discharge rate of a cell, and is obtained by dividing a total capacity of the cell by a total discharge period of time of 1 hour, e.g., a C rate for a battery having a discharge capacity of 1.6 ampere-hours would be 1.6 amperes. The total capacity is determined by a discharge capacity at 1st cycle.. 0.1 C or C/10 refers to a current that will fully discharge the battery in 10 hours.

The initial efficiency is shown in Table 2. It was confirmed that the battery of Example 15 showed excellent initial efficiency as compared with the initial efficiency of Comparative Example 8.

**Table 2**

| | Initial efficiency |
|---|---|
| Example 1 | 99.8% |
| Comparative Example 1 | 92.3% |

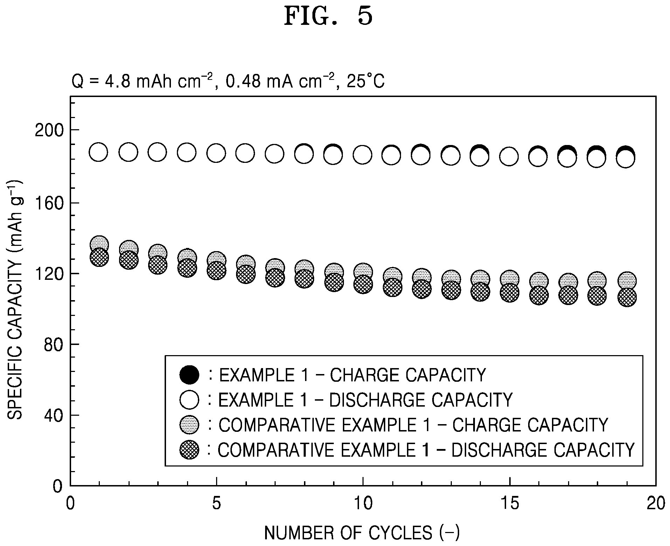

After the initial efficiency evaluation, charging was performed until the battery voltage reached 4.2 V with a constant current of 0.1 C and a constant voltage of 4.2 V until the current value reached 0.1 C. Subsequently, the battery was discharged with a constant current of 0.1 C until the battery voltage reached 2.5 V. This charging and discharging cycle was repeated for 20 times. After measuring the capacity in each cycle, the results thereof are shown in FIG. 5.

As shown in FIG. 5, the capacity of the battery of Comparative Example 8 gradually decreased, however, the coulombic efficiency of the all-solid battery of Example 10 exceeded 99.8 %, confirming that the capacity was maintained almost constant.

### Evaluation Example 5: Rate characteristics evaluation

The rate characteristics of the all-solid secondary batteries of Example 15 and Comparative Examples 8 and 9 were evaluated by the following test.

At room temperature (25 °C), charging was performed until the battery voltage reached 4.2 V with a constant current of 0.1 C and a constant voltage of 4.2 V until the current value reached 0.1 C. Subsequently, the battery was discharged with a constant current of 0.1 C until the battery voltage reached 2.5 V.

Subsequently, the battery was charged until the battery voltage reached 4.2 V with a constant current of 0.1 C and a constant voltage of 4.2 V until the current value reached 0.1 C, and then discharged with a constant current of 0.33 C until the battery voltage reached 2.5 V.

Subsequently, the battery was charged until the battery voltage reached 4.2 V with a constant current of 0.1 C and a constant voltage of 4.2 V until the current value reached 0.1 C, and then discharged with a constant current of 0.5 C until the battery voltage reached 2.5 V.

Subsequently, the battery was charged until the battery voltage reached 4.2 V with a constant current of 0.1 C and a constant voltage of 4.2 V until the current value reached 0.1 C, and then discharged with a constant current of 1 C until the battery voltage reached 2.5 V.

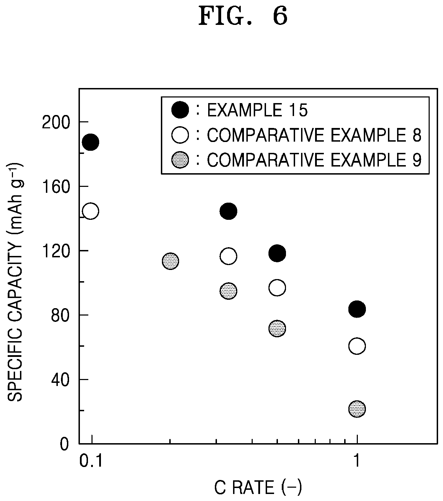

The specific capacity change of the all-solid batteries of Example 15 and Comparative Examples 8 and 9 according to the rate change is shown in FIG. 6.

Referring to FIG. 6, it was confirmed that the all-solid battery of Example 10 showed capacity retention of 43 % at a rate of 1 C.

As apparent from the foregoing description, an electrochemical cell having improved cycle characteristics is provided by including a solid ion conductor compound having improved lithium ion conductivity.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

## Claims

1. A solid ion conductor compound comprising a compound represented by Formula 1:
Formula 1 M₃₊ₘ₊₍ₗ₋₁₎ₒ₊₂ₚ(M'^{k+})ₙX_{3+m+kn-lo-3p+q}T^{l-}ₒZ³⁻p
wherein, in Formula 1,
M is at least one alkali metal,
M' is at least one of a divalent metal, a trivalent metal, a tetravalent metal, a pentavalent metal, or a hexavalent metal,
X is at least one halogen,
T is at least one of a monovalent anion, or a divalent anion,
Z is at least one of a trivalent anion,
2≤k≤6, 1≤l≤2, -3≤m≤3, 0<n≤1, 0≤o<3, 0<p<2, -3≤q≤3, and 0<(3+m+kn-lo-3p+q).

2. The solid ion conductor compound of claim 1, wherein M comprises at least one of Li, Na, K, Rb, or Cs; and/or
wherein M' comprises at least one of Mg, Zn, Ca, Sr, Ba, Eu, Y, Gd, In, Er, La, Yb, Ce, Ho, Sn, Th, Nb, Mo, W, Sb, Bi, Zr, Hf, Ti, or Si.

3. The solid ion conductor compound of claims 1 or 2, wherein X comprises at least one of F, Cl, Br, or I; and/or
wherein Z comprises at least one of PO₄³⁻, (C₆H₅O₇)³⁻, PS₄³⁻, [Fe(CN)]³⁻, [Ag(S₂O₃)₂]³⁻, N³⁻, or P³⁻; and/or
wherein T comprises at least one of NO₃⁻, CH₃COO⁻, OH⁻, HCO₃⁻, CrO₄²⁻, SO₄²⁻, CO₃²⁻, or BH₄⁻.

4. The solid ion conductor compound of any of claims 1-3, wherein Formula 1 is represented by Formula 2:
Formula 2 (Li₁₋ₕMₕ)₃₊ₘ₊₍ₗ₋₁₎ₒ₊₂ₚ(M'^{k+})ₙX_{3+m+kn-lo-3p+q}T^{l-}ₒ((PO₄)₁₋ᵢZ'ᵢ)ₚ
wherein, in Formula 2,
M is at least one alkali metal other than Li,
Z' is at least one of a trivalent anion other than PO₄³⁻,
M' is at least one of a divalent metal, a trivalent metal, a tetravalent metal, a pentavalent metal, or a hexavalent metal,
X is at least one halogen,
T is at least one of a monovalent anion, or a divalent anion, and
2≤k≤6, 1≤l≤2, -3≤m≤3, 0<n≤1, 0≤o<3, 0<p<2, -3≤q≤3, 0<(3+m+kn-lo-3p+q), 0≤h<1, and 0≤i<1.

5. The solid ion conductor compound of any of claims 1-4, wherein Formula 1 is represented by Formula 3:
Formula 3 (Li₁₋ₕMₕ)₃₊ₘ₊₍ₗ₋₁₎ₒ₊₂ₚ((Zr)₁₋ⱼM'ⱼ^{k+})ₙX_{3+m+kn-lo-3p+q}T^{l-}ₒ((PO₄)₁₋ᵢZ'ᵢ)ₚ
wherein, in Formula 3,
M is at least one alkali metal other than Li,
Z' is at least one of a trivalent anion other than PO₄³⁻,
M' is at least one of a divalent metal, a trivalent metal, a tetravalent metal, a pentavalent metal, and a hexavalent metal other than Zr,
X is at least one halogen,
T is at least one of a monovalent anion, or a divalent anion, and
2≤k≤6, 1≤l≤2, -3≤m≤3, 0<n≤1, 0≤o<3, 0<p<2, -3≤q≤3, 0<(3+m+kn-lo-3p+q), 0≤h<1, 0≤i<1, and 0≤j<1.

6. The solid ion conductor compound of any of claims 1-5, wherein the solid ion conductor compound has diffraction peaks at diffraction angles of 16°2θ±0.5°2θ, 20°2θ±0.5°2θ, 30°2θ±0.5°2θ, 32°2θ±0.5°2θ, 42°2θ±0.5°2θ, and 50°2θ±0.5°2θ, when analyzed by an X-ray diffraction using CuKα radiation; and/or
wherein n Formula 1, 0<p≤0.3..

7. The solid ion conductor compound of any of claims 1-6, wherein the solid ion conductor compound comprises at least one of a crystalline phase and a non-crystalline phase.

8. The solid ion conductor compound of any of claims 1-7, wherein the solid ion conductor compound comprises a crystal belonging to a P3-m1 space group.

9. The solid ion conductor compound of any of claims 1-8, wherein the solid ion conductor compound has a and c lattice constants, which are greater than a and c lattice constants of a solid ion conductor compound not comprising the trivalent anion represented by Z.

10. The solid ion conductor compound of any of claims 1-9, wherein the solid ion conductor compound is Li_{2.1}ZrCl_{5.95}(PO₄)_{0.05}, Li_{2.02}ZrCl_{5.99}(PO₄)_{0.01}, Li_{2.04}ZrCl_{5.98}(PO₄)_{0.02}, Li_{2.08}ZrCl_{5.96}(PO₄)_{0.04}, Li_{2.12}ZrCl_{5.94}(PO₄)_{0.06}, Li_{2.2}ZrCl_{5.9}(PO₄)_{0.1}, Li_{2.15}Zr_{0.8}Y_{0.2}Cl_{5.95}(PO₄)_{0.05}, Li_{2.45}Zr_{0.5}Y_{0.5}Cl_{5.95}(PO₄)_{0.05}, Li_{2.22}ZrCl_{5.89}(PO₄)_{0.11}, Li_{2.24}ZrCl_{5.88}(PO₄)_{0.12}, Li_{2.3}ZrCl_{5.85}(PO₄)_{0.15}, Li_{2.4}ZrCl_{5.8}(PO₄)_{0.2}, Li_{2.6}ZrCl_{5.7}(PO₄)_{0.3}, or Li_{2.1}ZrCl_{5.95}(PS₄)_{0.05}.

11. A method of preparing the solid ion conductor compound of any of claims 1 to 10, the method comprising:
providing a mixture comprising a halide compound comprising an M element, a halide compound comprising an M' element, and a compound comprising a Z anion, wherein the M element is at least one alkali metal, the M' element is at least one of a divalent metal, a trivalent metal, a tetravalent metal, a pentavalent metal, or a hexavalent metal, and the Z anion is at least one of a trivalent anion; and
treating the mixture in a solid phase to prepare the solid ion conductor compound.

12. The method of claim 11, wherein the treating of the mixture in a solid phase to prepare the solid ion conductor compound comprises ball milling the mixture in a dry and inert atmosphere,
preferably wherein the ball milling is performed for a first period of time, and the ball milling further comprises a rest period of time after the first period of time, wherein the first period of time and the rest period of time are repeated.

13. An electrochemical cell comprising:
a positive electrode layer comprising a positive active material layer comprising a positive active material;
a negative electrode layer comprising a negative active material layer comprising a negative active material; and
a solid electrolyte layer between the positive electrode layer and the negative electrode layer and comprising a solid electrolyte,
wherein at least one of the positive electrode layer, or the solid electrolyte layer comprises the solid ion conductor compound according to any of claims 1-10.

14. The electrochemical cell of claim 13, wherein the electrochemical cell is an all-solid secondary battery,
the solid electrolyte layer comprises a sulfide solid electrolyte,
the positive active material layer comprises at least one of a positive active material represented by LiNiₓCo_{y}Al_{z}O₂ wherein 0<x<1, 0<y<1, 0<z<1, and x+y+z=1, or LiNi_{x'}Co_{y'}Mn_{z'}O₂ wherein 0<x'<1, 0<y'<1, 0<z'<1, and x'+y'+z'=1, and
the negative active material layer comprises a lithium metal.

15. The electrochemical cell of claims 13 or 14, wherein when charging and discharging at 0.1 C in a range of 2.5 volts to 4.2 volts, a discharge capacity is maintained at 93 percent or greater for 20 cycles, as compared with an initial discharge capacity.
